# EUROPEAN PATENT SPECIFICATION

(11) **EP 3 268 251 B1**
(45) Date of publication and mention of the grant of the patent: **07.08.2019**
(21) Application number: 16708691.7
(22) Date of filing: 09.03.2016
(51) Int. Cl.: B60S 1/08, G01N 29/11, B60S 1/02, B60H 1/00, H05B 3/86

(54) **WINDSHIELD MONITORING SYSTEM**
WINDSCHUTZSCHEIBENÜBERWACHUNGSSYSTEM
SYSTÈME DE SURVEILLANCE DE PARE-BRISE

(30) Priority: 09.03.2015 GB 201503985
(43) Date of publication of application: 17.01.2018
(73) Proprietor: Jaguar Land Rover Limited, Coventry, Warwickshire CV3 4LF (GB)
(72) Inventor: PARSONS, Jonathan, Coventry Warwickshire CV3 4LF (GB); BELOE, Neil, Coventry Warwickshire CV3 4LF (GB)
(74) Representative: Hopley, Joanne Selina
(86) International application number: PCT/EP2016/054999
(87) International publication number: WO 2016/142413

(56) References cited:
- WO-A2-2010/115480
- DE-A1- 19 809 767
- DE-U1- 29 621 783

## Description

### TECHNICAL FIELD

The present disclosure relates to a windshield monitoring system, particularly but not limited to use in a vehicle. Aspects of the invention relate to a windshield monitoring system, a windshield clearing system, a vehicle including the same, a method of monitoring a windshield and a method of clearing a windshield.

### BACKGROUND

A vehicle such as a car or the like includes a frame supporting several windshields. A windshield is a term of art covering a front windscreen, a rear windscreen, or a side window, of which there are several. A windshield may comprise a laminate construction or it may be a singular piece of glass. A windshield serves several functions including segregating interior and exterior environments of the vehicle whilst providing visible communication between the two.

Windshields are prone to having their surfaces contaminated which can result in a degradation of visibility. Water based contaminants are most frequent and result from differences in humidity and temperature between interior and exterior environments of the vehicle. For instance, on a very cold day, moisture from occupant's respiration and/or wet clothing can condense on an interior surface of a windshield. Such condensation can be problematic from a visibility perspective when condensation covers large areas of a windshield. Another example of problematic windshield contamination is ice on an external surface of the windshield on a particularly cold day.

Typically, vehicles are provided with heating provisions which can be operated to clear such contamination. One such heating provision includes air blowers.

Another heating provision may include a heating element comprising a series of electroconductive parallel wires embedded into the laminated glass. The wires heat the glass by an energy transfer from electrical energy to thermal energy. As an alternative to electroconductive wires, a conductive sheet, such as an Infrared Reflective (IRR) layer may be used in a similar way by applying a voltage to the layer to generate heat. Such a system can be operated manually by an occupant pressing a push button on an instrument panel of the vehicle. However, using such a manually operated system requires an occupant to monitor the windshield themselves. At the time of detection of any contamination, the area of contamination is likely to be very large resulting in excessive power being required to clear the contamination. Similarly, the heating element may be left on for a prolonged period of time after the contamination has cleared, resulting in further energy wastage.

Attempts have been made to detect the presence of contamination automatically.

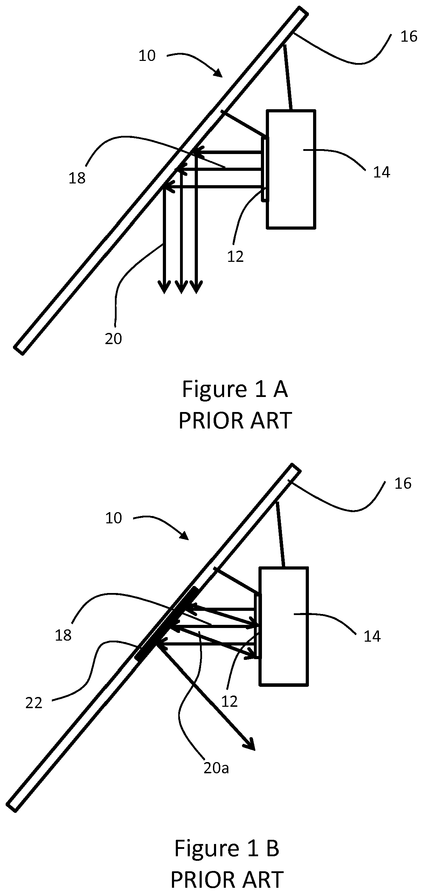

With reference to Figures 1 A and 1 B, one known system includes a windshield 10 having a combined emitter/detector 12 mounted on a reverse (non-reflective) side of a rear-view mirror 14. The emitter shines infrared light 18 onto an interior surface 16 of the windshield 10. Since the windshield 10 is oriented at an acute angle of inclination relative to the rear-view mirror, any reflected light 20 from the emitter reflects away from the detector 12. However, the presence of contamination 22 in the area of the windshield 10 where the light 18 is shone is scattered on reflection. The scattered light 20a is likely to impinge on the detector 12. Any detected light is determined to be attributable to the present of surface contamination 22.

Such a system is not ideal since the scattered light 20a may not impinge on the detector 12 and in addition only contamination in the area of the windshield 10 where light is shone can be detected. Accordingly, such attempts to automatically heat the windshield to clear the contamination are not energy efficient since it is likely that large areas of contamination can develop before being detected. Also, if condensation is present only within the area of the detector, the entire windshield may be heating unnecessarily, resulting in further energy inefficiencies.

Other forms of windshield contaminant detection systems are also known. For instance, a dew point detection system is known for detecting dew formation on an interior surface of a windshield. Such dew point detection systems work by estimating dew formation by calculation based on humidity and temperature. Since these dew point detection systems are based on calculation rather than being detected directly, they are inherently inaccurate. As a result, any windshield clearing mechanisms, such as heating mechanisms, used to clear the windshield based on the detection of dew in this way may be activated in an untimely manner. Untimely activation of the clearing mechanisms wastes energy since the windshield may either be heated when no dew is present, or be activated later than required, allowing a relatively large area of dew to form which would be harder to clear.

WO 2010/115480 describes an arrangement for detecting the presence of a liquid droplet on a substrate. The arrangement includes a transmitter for exciting acoustic waves in the substrate and a receiver for receiving acoustic waves. The presence of liquid on the substrate is detected through monitoring for a change in the intensity of the acoustic wave received at the receiver.

It is an object of the present invention to further improve on the prior art.

### SUMMARY OF THE INVENTION

According to an aspect of the present invention there is provided a windshield monitoring system. The system comprises an emitter arranged to emit a sound pulse to induce a surface acoustic wave (SAW) on a surface of a windshield. The system comprises a sensor arranged to receive the surface acoustic wave from the windshield. The system comprises a detection module arranged to detect the presence of surface contamination by intensity attenuation of the received sound wave compared to an expected sound wave. The system comprises a waveguide to spread the SAW across the windshield from the emitter to the sensor.

SAWs can be used to detect any irregularities such as contamination at the surface of the windshield as to sound waves are more readily absorbed by such contamination by comparison to the glass of the windshield itself. Being able to detect such contamination so reliably provides for a more efficient system as early detection allows the contamination to be removed before it builds up to obscure visibility.

The system may comprise a windshield.

Spreading the SAW across the screen means that more of the windshield can benefit from this monitoring system.

The waveguide may comprise a source reflector and a sink reflector, the source reflector arranged to direct the SAW away from the emitter and progressively reflect the SAW, along the length thereof, across the windshield to the sink reflector, the sink reflector arranged to reflect any received waveform to the sensor, wherein the source and sink reflectors are formed as substantially parallel elongate strips along opposing edges of the windshield.

Source and sink reflectors arranged in this way provide for a reliable expected signal at the detector. Specifically, the source and sink reflectors arranged in this way would result in the detected signal being a continuum signal.

The windshield monitoring system may comprise a locating module to locate the position of the contamination by the time of attenuation on the received SAW.

Locating the contamination by time of the attenuation is an easy and reliable way to detect the contamination. This can have a beneficial knock-on effect in that less sophisticated detection algorithms will suffice to detect the contamination.

The reflectors may comprise surface etchings on a surface of the windshield.

Surface etchings are reliable in reflecting SAWs and such etchings are relatively easy to manufacture.

The windshield monitoring system may comprise an identification module arranged to identify the type of contamination by the characteristics of the attenuation in intensity of the received SAW.

Being able to detect the type of contamination, for instance, distinguishing between moisture and ice, could be used downstream to tailor the amount of heating required in order to deal with such contamination. Even further energy efficiencies may be achieved as a result.

The emitter, the sensor and the waveguide may form a primary SAW system and wherein the windshield monitoring system may comprise a secondary SAW system, wherein the secondary SAW system may be a substantially orthogonal duplicate of the primary SAW system to provide two-dimensional surface contamination detection.

Two-dimensional detection provides for even more effective clearing of the contamination since it would allow a more localised heating to be performed by any heating system downstream.

The windshield may be a front windscreen, a rear windscreen, or a side window of a vehicle, alone or in any combination.

According to a further aspect of the present invention there is provided a windshield clearing system, comprising; the aforementioned windshield monitoring system; and a windshield clearing element to clear at least part of the windshield in response to detecting the presence of surface contamination.

Heating the windshield in response to detecting the presence of surface contamination prevents significant areas of contamination building up. Clearing the contamination is thus quicker and more energy efficient. Lower energy consumption for clearing windshields is particularly important for electric vehicles or hybrid electric vehicles.

The windshield clearing element may comprise a heating mechanism.

The heating mechanism may comprise a plurality of heating elements and in response to locating surface contamination; heating a heating element corresponding to the location of contamination may be heated. Heating only a heating element where contamination has been detected is more energy efficient than heating the entire windshield.

Each heating element may be a resistance heating element. Each heating element may be independently controllable from one another.

The resistance heating element may comprise a conductive layer made from a metallic material
Metallic layers are beneficial during production since they can be applied to a windshield in various ways such as vapour deposition.

The windshield clearing system may comprise a termination module arranged to terminate heating in response to the windshield monitoring system ceasing to detect contamination.

Terminating the heating in response to the contamination being removed provides for even further energy efficiencies as opposed to a time based approach, where heating is applied for a predetermined time period after initiation.

According to a further aspect of the present invention there is provided a vehicle comprising the aforementioned windshield conditioning.

According to a further aspect of the present invention there is provided a method of monitoring a windshield, comprising;
emitting a sound pulse to induce a surface acoustic wave (SAW) to a surface of the windshield;
transmitting the SAW along an edge of the windshield;
progressively reflecting the SAW along the opposing edge of the windshield;
reflecting the SAW along the opposing edge of the windshield to a detector;
detecting the presence of surface contamination by attenuation in intensity of the received surface acoustic wave; and
locating the surface contamination by the time coordinate of the attenuation on the SAW signal.

The method of monitoring a windshield may comprise;
emitting a secondary sound pulse to induce a secondary SAW to a surface of the windshield, the secondary sound pulse transmitting across the windshield to a detector in a direction substantially orthogonal to the first SAW; and
locating the position of contamination in 2 dimensional co-ordinates.

According to a further aspect of the present invention there is provided a method of clearing a windshield, comprising;
determining the presence of surface contamination using the aforementioned method of monitoring a windshield; and
heating at least part of the windshield in response to detecting surface contamination.

The method of clearing the windshield may comprise;
dividing the windshield into separate zones to be heated; and
heating a zone of the windshield corresponding to the location of the surface contamination.

The method of clearing the windshield may comprise;
terminating heating in response to contamination no longer being detected.

Within the scope of the claims of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, within the scope of the claims, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1A shows a moisture detection system as known from the prior art;
Figure 1B shows a similar view to Figure 1A;
Figure 2 shows part of a windshield monitoring system according to an aspect of the present invention;
Figure 3 shows a block diagram of the windshield monitoring system from Figure 2;
Figure 4 shows a windshield clearing system according to a further aspect of the present invention;
Figure 5 shows a surface acoustic wave (SAW) detected using the windshield monitoring system of Figure 2; and
Figure 6 shows a similar view to Figure 5 of the SAW detecting surface contamination.

### DETAILED DESCRIPTION

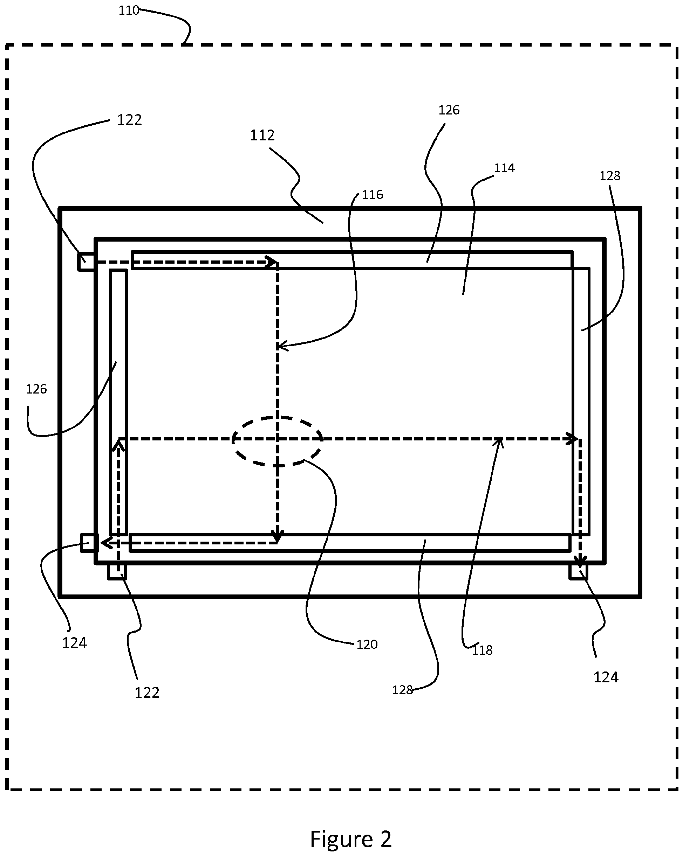

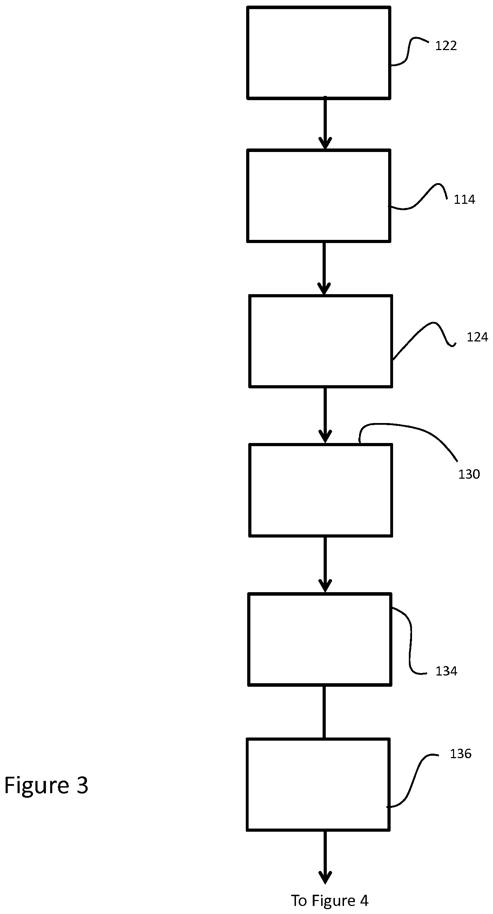

With reference to Figure 2, a vehicle 110 includes a vehicle frame 112 supporting at least one windshield 114. The vehicle 110 also includes a windshield monitoring system part of which is shown in Figure 2 with Figure 3 showing a more detailed version in the form of a block diagram.

The term windshield is used to cover a front windscreen, or a rear windscreen or a side window, of which there are several. Each windshield 114 is fabricated from laminated glass, or may alternatively be fabricated from a single sheet of glass. Each windshield is supported by various parts of the car frame 112. The windshields 114 serve various functions such as segregating an exterior environment from an interior environment of the vehicle 110. In addition, the windshields 114 allow for visibility between the interior and exterior environments.

The windshield monitoring system includes a primary surface acoustic wave (SAW) system 116 and a secondary SAW system 118, as will be described in more detail below.

The primary SAW system 116 is used to detect a vertical position of contamination 120 and the secondary SAW system 118 is used to detect a horizontal position of contamination 120. The secondary SAW system is a substantially orthogonal duplicate of the primary SAW system. The primary and secondary SAW systems allow for two-dimensional detection when used in combination.

Both the primary and secondary SAW systems 116, 118, include an emitter 122, a sensor 124, and a waveguide.

The emitters 122 and the sensors 124 are both transducers arranged to transmit and receive a surface acoustic wave (SAW) respectively. The transducers use piezoelectric crystals to convert sound energy to electrical energy and vice versa. These transducers are formed from two inter-lockable comb shaped metallic coatings applied to a piezoelectric substrate such as quartz.

The emitter 122 and sensor 124 of each SAW system 116, 118, are provided on the same side of the windshield 114 as each other. In this case, the primary SAW system 116 has the emitter 122 and sensor 124 located on a left side edge of the windshield 114. The secondary SAW system 118 has a sensor 124 and an emitter 122 located on a lower horizontal edge of the windshield 114. As will be described in more detail below, the emitter 122 and sensor 124 located on the same side of the windshield 114 results in an expected wave form sensed by the sensor 124 to be in the form of a continuum.

The waveguide spreads the SAW across the windshield 114 from the respective emitter 122 to the sensor 124. Each waveguide has a source reflector 126 and a sink reflector 128. The source reflector 126 is formed as an elongate strip on the same side of the windshield as the emitter 122. The sink reflector 128 is provided on the opposing edge of the windshield 114 in line with the sensor 124. The source and sink reflectors thus form substantially parallel elongate strips along opposing edges of the windshield. The reflectors are formed as surface etchings on a surface of the windshield 114. It is possible to provide these surface etchings on either surface of the windshield 114. If rain or ice detection is required, the etchings should be provided on an exterior surface of the windshield 114. If contamination is required on the interior surface, the surface etchings should be provided on an interior surface of the windshield 114.

The source reflector 126 directs the SAW from the emitter 122, along the windshield to the opposing edge. The surface etchings of the reflector guide the SAW substantially transverse to its originating direction so as to progressively propagate across the windshield 114. The transverse reflection of the SAW is thus reflected across the windshield 114 to the sink reflector 128. As will be described in more detail below, any contamination 120 causes attenuation in intensity of the SAW reaching the sink reflector 128.

The sink reflector 128 is also arranged to reflect any received wave form from the sink reflector 126 transversely towards the sensor 124.

With reference to Figure 3, the windshield monitoring system includes the emitter 122 arranged to emit a sound pulse to induce a surface acoustic wave (SAW) on a surface of the windshield 114, and a sensor 124 arranged to receive the SAW from the windshield 114. The windshield monitoring system also includes a detection module 130. The expected wave form will always be constant in the absence of any contamination on the windshield. The detection module 130 thus detects the presence of surface contamination by a change in intensity of the received wave compared to the expected wave form. In particular, surface contamination is characterised by attenuation in intensity compared to the expected wave form.

The windshield monitoring system also includes a locating module 134 arranged to receive an output from the detection module 130. The locating module has a timer function. Any contamination detected by the detection module 130 is provided with a coordinate by the locating module based on the time at which the contamination has occurred on the received wave form.

The windshield monitoring system also includes an identification module 136. The type of contamination can be determined based on the shape or characteristics of attenuation intensity of the received SAW. The identification module 136 has a look-up table detailing various expected contamination types and their corresponding attenuation shape. The identification module 136 compares the received signal to the characteristics provided in the look-up table to determine the type of contamination on the windshield 114.

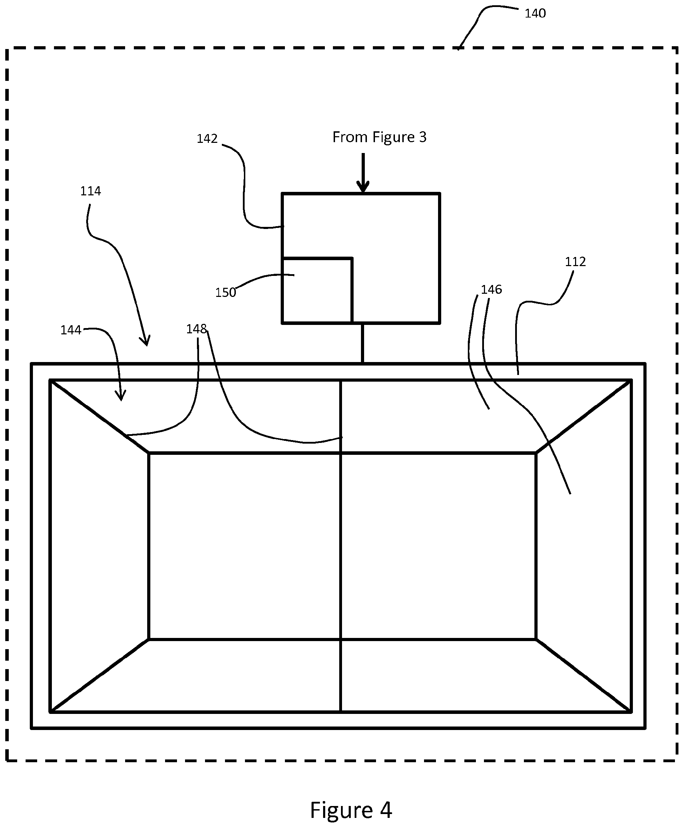

With reference to Figure 4, the vehicle also includes a windshield clearing system 140. The windshield clearing system includes the windshield monitoring system, a control module 142 and a heating mechanism 144.

The control module 142 is arranged to pass a voltage across the heating mechanism 144. The control module 142 like the other aforementioned modules, is provided as electronic data on a non-volatile memory component of an on board computer system. The computer system also has a processor arranged to execute the electronic data of the various modules during operation.

The heating mechanism 144 comprises a plurality of heating elements, these heating elements are divided into two categories; active heating elements 146 and passive heating elements 148. Each active heating element 146 is a resistance heating element including a conductive layer, made from a metallic layer. The metallic layer may be a silver based alloy. Of course, other conductive or resistive materials would suffice as a conductive layer. Those other materials may include organic materials such as graphene. The metallic layer is vapour deposited on to the windshield to form a plurality of the active heating elements 146. The active heating elements 146 are separated from adjacent active heating elements by passive heating elements 148. Passive heating elements 148 are formed by areas of clear glass not having a metallic layer deposited thereon. These uncoated areas are relatively narrow so as to prevent a pattern of unclear windshield. The passive heating elements 148 thus electrically insulate adjacent active heating elements 146. Each of the active heating elements 146 can have a voltage passed across it to specifically heat that heating element. By the provision of the active and passive heating elements, it will be appreciated that the windshield is divided into a plurality of independently controllable heating zones.

The windshield clearing system also comprises a termination module 150. The termination module 150 is again provided as electronic data by the other aforementioned modules. The termination module 150 is arranged to terminate heating of the heating mechanism 144 in response to the windshield monitoring system ceasing to detect windshield contamination.

With further reference to Figure 2, in operation, each emitter 122 emits a sound pulse into the respective source reflector 126. The source reflector 126 reflects the respective SAW transversely across the windshield 114. The SAW is propagated across the windshield 114 for the length of the reflector 126. The sink reflector 128 receives the surface acoustic wave progressively along its length. In response to receiving the SAW, the sink reflector 128 transversely reflects the SAW to the sensor 124.

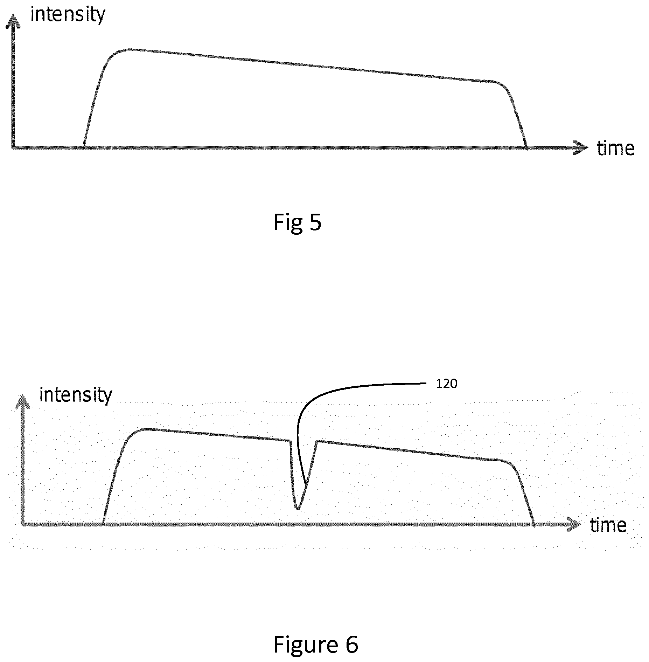

With reference to Figure 5, the intensity of the received signal is shown over time. Over the time period for one sound pulse it can be seen that the intensity naturally drops. This drop in intensity is proportional to the distance which the SAW travels whilst being progressively transmitted across the length of the windshield.

With further reference to Figure 2, areas of contamination 120 can exist on a surface of the windshield 114. This system particularly lends itself to detecting water based contamination such as ice, moisture, and liquid water. This is because water based contaminants absorb energy from the SAW more effectively than the windshield and surrounding structures.

With reference to Figure 6, the drop in intensity caused by the contamination 120 can be seen as a parabola. Other shapes of attenuation and attenuation over a longer time period signifies different contamination type and area of coverage respectively.

With reference to Figure 3, the detecting module 130 detects the contamination after comparing the expected wave form to the actual received wave form. The locating module 134 locates the contamination in two dimensions according to the time and duration of the attenuated signal on each wave form received by the respective sensor 124 of each of the primary and secondary SAW systems. In addition, the type of contamination, characterised by the shape of attenuation, is determined by the identification module 136 by comparing the attenuated portion of the signal with the look-up. The location and identification data is then passed to the control module of the windshield clearing system 140 (Figure 4).

With reference to Figure 4, the control module 142 uses the location of contamination to determine which active heating element 146 should be heated. The specified heating element 146 is heated by applying a voltage to the metallic layer forming the resistant heating mechanism 144. The other active heating elements 146 remain unheated.

In parallel to heating the windshield, the windshield monitoring system (Figure 3) continues to monitor the windshield 114 to monitor the already detected contamination as well as any new contamination. Once the contamination 120 has cleared up, the termination module 150 configures the voltage passed across the previously heated element 146 to be zero Volts so as to terminate heating.

The aforementioned systems provide for numerous energy efficiencies. The surface acoustic wave may detect contamination early since SAWs are thought to be attenuated by water and are thus detectable. In addition, segmenting the windscreen and heating only the heating element where contamination has been detected is more energy efficient than heating the entire windshield.

## Claims

1. A windshield monitoring system, comprising:
an emitter (122) arranged to emit a sound pulse to induce a surface acoustic wave (SAW) on a surface of a windshield (114);
a sensor (124) arranged to receive the SAW from the windshield (114); and
a detection module (130) arranged to detect the presence of surface contamination (120) by intensity attenuation of the received wave compared to an expected wave;
**characterised in that** the system comprises a waveguide to spread the surface acoustic wave across the windshield (114) from the emitter (122) to the sensor (124).

2. The system of Claim 1 wherein the waveguide comprises a source reflector (126) and a sink reflector (128), the source reflector (126) arranged to direct the SAW away from the emitter (122) and progressively reflect the SAW, along the length thereof, across the windshield (114) to the sink reflector (128), the sink reflector (128) arranged to reflect any received waveform to the sensor (124), wherein the source and sink reflectors (126, 128) are formed as substantially parallel elongate strips along opposing edges of the windshield (114).

3. The system of Claim 2 comprising a locating module (134) to locate the position of the contamination (120) by the time of attenuation on the received SAW.

4. The system of Claim 2 or Claim 3 wherein the reflectors (126, 128) comprise surface etchings on a surface of the windshield (114).

5. The system of any preceding claim wherein the corresponding emitter (122) and sensor (124) are provided on the same side of the windshield (114).

6. The system of any preceding claim comprising an identification module (136) arranged to identify the type of contamination (120) by the characteristics of attenuation in intensity of the received surface acoustic wave.

7. The system of Claim 3 wherein the emitter (122), the sensor (124) and the waveguide form a primary SAW system (116) and wherein the windshield monitoring system comprises a secondary SAW system (118), wherein the secondary SAW system (118) is a substantially orthogonal duplicate of the primary SAW system (116) to provide 2-dimensional surface contamination detection.

8. The system of any preceding claim wherein the windshield (114) is a front windscreen, or a rear windscreen of a vehicle, or a side window.

9. The system of any preceding claim wherein the contamination (120) is selected from the list of moisture, liquid water, and ice.

10. A windshield clearing system comprising: the windshield monitoring system of any preceding claim; and a windshield clearing element to clear at least part of the windshield in response to detecting the presence of surface contamination (120).

11. The system of Claim 10 wherein the windshield clearing element comprises a heating mechanism (144).

12. The system of Claim 11 wherein the windshield monitoring system is that of Claim 4, and wherein the heating mechanism (144) comprises a plurality of heating elements (146, 148), wherein, in response to locating surface contamination (120), a heating element (146, 148) corresponding to the location of contamination (120) is heated.

13. A vehicle (110) comprising the windshield clearing system of any of Claims 10 to 12.

14. A method of monitoring a windshield, comprising;
emitting a sound pulse to induce a surface acoustic wave (SAW) to a surface of the windshield (114);
transmitting the SAW along an edge of the windshield (114);
progressively reflecting the SAW to an opposing edge of the windshield (114);
reflecting the SAW along the opposing edge of the windshield (114) to a detector;
detecting the presence of surface contamination (120) by attenuation in intensity of the received SAW; and
locating the surface contamination (120) by the time coordinate of the attenuation on the SAW signal.

15. A method of clearing a windshield, comprising;
determining the presence of surface contamination (120) using the method of Claim 14; and
heating at least part of the windshield (114) in response to detecting surface contamination (120).

## Patentansprüche

1. Windschutzscheibenüberwachungssystem, Folgendes umfassend:
einen Emitter (122), der angeordnet ist, um einen Schallimpuls zu emittieren, um eine akustische Oberflächenwelle (s*urface acoustic wave* - SAW) auf einer Oberfläche einer Windschutzscheibe (114) zu induzieren;
einen Sensor (124), der angeordnet ist, um die SAW von der Windschutzscheibe (114) zu empfangen; und
ein Erfassungsmodul (130), das angeordnet ist, um das Vorhandensein einer Oberflächenverunreinigung (120) durch eine Intensitätsabschwächung der empfangenen Welle im Vergleich zu einer erwarteten Welle zu erfassen;
**dadurch gekennzeichnet, dass** das System eine Wellenführung zum Verteilen der akustischen Oberflächenwelle über die Windschutzscheibe (114) von dem Emitter (122) zu dem Sensor (124) umfasst.

2. System nach Anspruch 1, wobei die Wellenführung einen Quellenreflektor (126) und einen Kühlkörperreflektor (128) umfasst, wobei der Quellenreflektor (126) angeordnet ist, um die SAW von dem Emitter (122) weg zu lenken und die SAW fortschreitend entlang der Länge davon über die Windschutzscheibe (114) zu dem Kühlkörperreflektor (128) zu reflektieren, wobei der Kühlkörperreflektor (128) angeordnet ist, um jede empfangene Wellenform an den Sensor (124) zu reflektieren, wobei der Quell- und der Kühlkörperreflektor (126, 128) als im Wesentlichen parallele längliche Streifen entlang gegenüberliegender Kanten der Windschutzscheibe (114) ausgebildet sind.

3. System nach Anspruch 2, umfassend ein Ortungsmodul (134), um die Position der Verunreinigung (120) durch die Zeit der Abschwächung auf der empfangenen SAW zu orten.

4. System nach Anspruch 2 oder 3, wobei die Reflektoren (126, 128) Oberflächenätzungen auf einer Oberfläche der Windschutzscheibe (114) umfassen.

5. System nach einem der vorhergehenden Ansprüche, wobei der entsprechende Emitter (122) und der Sensor (124) auf derselben Seite der Windschutzscheibe (114) bereitgestellt werden.

6. System nach einem der vorhergehenden Ansprüche, umfassend ein Identifikationsmodul (136), das angeordnet ist, um die Art der Verunreinigung (120) durch die Eigenschaften der Abschwächung in Bezug auf die Intensität der empfangenen akustischen Oberflächenwellen zu identifizieren.

7. System nach Anspruch 3, wobei der Emitter (122), der Sensor (124) und die Wellenführung ein primäres SAW-System (116) ausbilden, und wobei das Windschutzscheibenüberwachungssystem ein sekundäres SAW-System (118) umfasst, wobei das sekundäre SAW-System (118) ein im Wesentlichen orthogonales Duplikat des primären SAW-Systems (116) ist, um eine zweidimensionale Oberflächenverunreinigungserfassung bereitzustellen.

8. System nach einem der vorhergehenden Ansprüche, wobei die Windschutzscheibe (114) eine vordere Windschutzscheibe oder eine hintere Windschutzscheibe eines Fahrzeugs oder ein Seitenfenster ist.

9. System nach einem der vorhergehenden Ansprüche, wobei die Verunreinigung (120) aus der Liste von Feuchtigkeit, flüssigem Wasser und Eis ausgewählt ist.

10. Windschutzscheibenreinigungssystem, Folgendes umfassend: das Windschutzscheibenüberwachungssystem nach einem vorhergehenden Anspruch; und ein Windschutzscheibenreinigungselement, um wenigstens einen Teil der Windschutzscheibe als Reaktion auf das Erfassen des Vorhandenseins einer Oberflächenverunreinigung (120) zu reinigen.

11. System nach Anspruch 10, wobei das Windschutzscheibenreinigungselement einen Heizmechanismus (144) umfasst.

12. System nach Anspruch 11, wobei das Windschutzscheibenüberwachungssystem das nach Anspruch 4 ist, und wobei der Heizmechanismus (144) mehrere Heizelemente (146, 148) umfasst, wobei ein Heizelement (146, 148), das dem Ort der Verschmutzung (120) entspricht, als Reaktion auf das Orten einer Oberflächenverunreinigung (120) erhitzt wird.

13. Fahrzeug (110), umfassend das Windschutzscheibenreinigungssystem nach einem der Ansprüche 10 bis 12.

14. Verfahren zum Überwachen einer Windschutzscheibe, Folgendes umfassend;
Emittieren eines Schallimpulses, um eine akustische Oberflächenwelle (SAW) an eine Oberfläche der Windschutzscheibe (114) zu induzieren;
Übertragen der SAW entlang einer Kante der Windschutzscheibe (114); fortschreitendes Reflektieren der SAW auf eine gegenüberliegende Kante der Windschutzscheibe (114);
Reflektieren der SAW entlang der gegenüberliegenden Kante der Windschutzscheibe (114) zu einem Detektor;
Erfassen des Vorhandenseins einer Oberflächenverunreinigung (120) durch Abschwächung in Bezug auf die Intensität der empfangenen SAW; und
Orten der Oberflächenverunreinigung (120) durch die Zeitkoordinate der Abschwächung auf dem SAW-Signal.

15. Verfahren zum Reinigen einer Windschutzscheibe, Folgendes umfassend:
Bestimmen des Vorhandenseins einer Oberflächenverunreinigung (120) unter Verwendung des Verfahrens nach Anspruch 14; und
Erhitzen wenigstens eines Teils der Windschutzscheibe (114) als Reaktion auf das Erfassen einer Oberflächenverunreinigung (120).

## Revendications

1. Système de surveillance de pare-brise, comprenant :
un émetteur (122) conçu pour émettre une impulsion sonore afin d'induire une onde acoustique de surface (SAW) sur la surface d'un pare-brise (114) ;
un capteur (124) conçu pour recevoir la SAW du pare-brise (114) ; et
un module de détection (130) conçu pour détecter la présence d'une contamination de surface (120) par atténuation d'intensité de l'onde reçue par rapport à une onde attendue ;
**caractérisé en ce que** le système comprend un guide d'ondes pour répandre l'onde acoustique de surface sur le pare-brise (114) de l'émetteur (122) au capteur (124).

2. Système selon la revendication 1, dans lequel le guide d'ondes comprend un réflecteur source (126) et un réflecteur puits (128), le réflecteur source (126) étant agencé de manière à éloigner la SAW de l'émetteur (122) et à réfléchir progressivement la SAW, suivant la longueur de celui-ci, à travers le pare-brise (114) jusqu'au réflecteur puits (128), le réflecteur puits (128) est agencé pour réfléchir toute forme d'onde reçue vers le capteur (124), les réflecteurs source et puits (126, 128) étant formés comme des bandes allongées sensiblement parallèles le long des bords opposés du pare-brise (114).

3. Système selon la revendication 2 comprenant un module de localisation (134) pour localiser la position de la contamination (120) au moment de l'atténuation sur la SAW reçue.

4. Système selon la revendication 2 ou 3, dans lequel les réflecteurs (126, 128) comprennent des gravures de surface sur une surface du pare-brise (114).

5. Système selon l'une quelconque des revendications précédentes, dans lequel l'émetteur (122) et le capteur (124) correspondants sont prévus sur le même côté du pare-brise (114).

6. Système selon l'une quelconque des revendications précédentes, comprenant un module d'identification (136) agencé pour identifier le type de contamination (120) par les caractéristiques d'atténuation de l'intensité de l'onde acoustique de surface reçue.

7. Système selon la revendication 3, dans lequel l'émetteur (122), le capteur (124) et le guide d'ondes forment un système SAW primaire (116) et dans lequel le système de surveillance de pare-brise comprend un système SAW secondaire (118), dans lequel le système SAW secondaire (118) est une copie sensiblement orthogonale du système SAW primaire (116) pour assurer une détection bidimensionnelle de la contamination de surface.

8. Système selon l'une quelconque des revendications précédentes, dans lequel le pare-brise (114) est un pare-brise avant, ou un pare-brise arrière de véhicule, ou une vitre latérale.

9. Système selon l'une quelconque des revendications précédentes, dans lequel la contamination (120) est sélectionnée dans la liste de l'humidité, l'eau liquide et la glace.

10. Système de dégagement de pare-brise comprenant : le système de surveillance de pare-brise selon l'une quelconque des revendications précédentes ; et un élément de dégagement de pare-brise pour dégager au moins une partie du pare-brise en réponse à la détection de la présence d'une contamination de surface (120).

11. Système selon la revendication 10, dans lequel l'élément de dégagement de pare-brise comprend un mécanisme de chauffage (144).

12. Système selon la revendication 11, dans lequel le système de surveillance de pare-brise est celui de la revendication 4, et dans lequel le mécanisme de chauffage (144) comprend une pluralité d'éléments chauffants (146, 148), dans lequel, en réponse à la localisation d'une contamination de surface (120), un élément chauffant (146, 148) correspondant à l'emplacement de la contamination (120) est chauffé.

13. Véhicule (110) comprenant le système de dégagement de pare-brise selon l'une quelconque des revendications 10 à 12.

14. Procédé de surveillance d'un pare-brise, consistant à :
émettre une impulsion sonore pour induire une onde acoustique de surface (SAW) sur une surface du pare-brise (114) ;
transmettre la SAW le long d'un bord du pare-brise (114) ;
réfléchir progressivement la SAW sur un bord opposé du pare-brise (114) ; réfléchir la SAW le long du bord opposé du pare-brise (114) vers un détecteur ; détecter la présence d'une contamination de surface (120) par atténuation d'intensité de la SAW reçue ; et
localiser la contamination de surface (120) par la coordonnée temporelle de l'atténuation sur le signal SAW.

15. Procédé de dégagement d'un pare-brise, consistant à ;
déterminer la présence d'une contamination de surface (120) en utilisant le procédé de la revendication 14 ; et
chauffer au moins une partie du pare-brise (114) en réponse à la détection d'une contamination de surface (120).
